# EUROPEAN PATENT APPLICATION

(11) **EP 1 219 506 A2**
(43) Date of publication of application: **03.07.2002**
(21) Application number: 01130242.9
(22) Date of filing: 19.12.2001
(51) Int. Cl.: B60R 21/20, C08L 23/02, C08L 53/00

(54) **Air bag housing cover**

(30) Priority: 25.12.2000 JP 2000392421; 28.03.2001 JP 2001092424
(71) Applicant: Mitsubishi Chemical Corporation, Chiyoda-ku, Tokyo (JP)
(72) Inventor: Gakuji, Shin, Yokkaichi-shi, Mie-ken 510-8530 (JP); Itou, Motoko, Yokkaichi-shi, Mie-ken 510-8530 (JP)
(74) Representative: HOFFMANN - EITLE

(57) **Abstract**

The present invention relates to an air bag housing cover comprising (A) an olefin-based thermoplastic elastomer comprising (A1) a propylene homopolymer having an isotactic index of not less than 90%, and (A2) a copolymer of propylene and a C₂ to C₈ α-olefin other than propylene, said propylene homopolymer (A1) and said copolymer (A2) being present in amounts of 30 to 60% by weight and 70 to 40% by weight, respectively, based on a total amount of the components (A1) and (A2), and said copolymer having propylene unit and ethylene unit as essential constituting units,
said olefin-based thermoplastic elastomer (A) being obtained by producing the component (A2) by polymerization subsequent to the production of the component (A1) by polymerization, and having a 0°C eluate content of 30 to 60% by weight based on a total eluate content as measured at a temperature between 0°C and 140°C by a temperature rising elution fractionation using o-dichlorobenzene as a solvent.

## Description

### BACKGROUND OF THE INVENTION

This invention relates to an air bag housing cover and, more particularly, to a cover for housing an air bag of an air bag device which actuates upon sensing an impact or a distortion caused by a vehicle collision to inflate and develop the air bag for the protection of a driver or occupants.

Conventionally, as an air bag housing cover of an air bag device installed in an interior part such as an instrument panel, the main trend has been toward the use of a destructive type cover which is also called tear type cover having an expected tear line on the backside thereof to provide a thin and fragile portion which is easily opened at the time of inflation of the air bag. For the purpose of preventing breakage of portions other than the expected tear line and scattering thereof at the time of inflation and development of the air bag, such an air bag housing cover is generally made of a material which has no risk of brittle fracture and which is more flexible and less rigid than the interior part in which the air bag device is installed. For example, there has been used an elastomer composition including an olefin-based thermoplastic elastomer, which is a mixture of a propylene-based resin and an ethylene-α-olefin copolymer rubber, as the main ingredient and additional ingredients such as a styrene-based thermoplastic elastomer, an inorganic filler and a hydrocarbon rubber softener, when the other interior parts are made of a resin composition mainly composed of a propylene-based resin. Such an air bag housing cover is usually prepared by injection molding.

Japanese Patent Application Laid-Open (KOAKI) No.11-80493 (1999) proposes an air bag housing cover made of an elastomer composition mainly composed of an olefin-based thermoplastic elastomer. In Japanese Patent Application Laid-Open (KOAKI) No.11-80493 (1999), an olefin-based thermoplastic elastomer prepared by continuously polymerizing a propylene-based resin component and an ethylene-α-olefin copolymer rubber component is used as a material of the air bag housing cover, in place of a mixture of a propylene-based resin and an ethylene- α-olefin copolymer rubber.

In addition to the destructive tear type cover, there has been proposed a nondestructive, door type air bag housing cover which is locked by an engaging member engaged by an opening formed in a surrounding interior part in normal times and released by a hinge portion under abnormal conditions, with the necessity of eliminating the fear of destruction or scattering of the housing cover at the time of inflation and development of the air bag to improve safety and with an increasing demand for an air bag housing cover which is less different from other interior parts in rigidity feeling and appearance in recent years. For example, Japanese Patent Application Laid-Open (KOAKI) 11-236483(1999) discloses a nondestructive air bag housing cover made of an elastomer composition mainly composed of an olefin-based thermoplastic elastomer, which is a mixture of a propylene-based resin and an ethylene-α-olefin copolymer rubber.

However, with an elastomer composition mainly composed of an olefin-based thermoplastic elastomer comprising a mixture of a propylene resin and an ethylene-α-olefin copolymer rubber, low surface gloss can be hardly obtained in the molded air bag covers for both the destructive type and nondestructive type (especially in the destructive type air bag cover). Additionally, the cover is poor in releasing property. As for the elastomer composition prepared by continuously polymerizing a propylene-based resin component and an ethylene-α-olefin copolymer rubber component, the physical properties thereof, which are better than those of the mixture type, are not fully satisfactory. Thus, neither of the elastomer compositions is fully satisfactory in mechanical properties such as proper degree of flexibility (rigidity) and low-temperature impact resistance, surface gloss, releasing property and so on.

### SUMMARY OF THE INVENTION

The first object of the present invention is to provide an air bag housing cover which comprises an olefin-based thermoplastic elastomer, which is excellent in mechanical properties such as flexibility and low-temperature impact resistance, which is low in surface gloss, which is excellent in releasing property and dimensional stability, and which is perfectly opened at the expected tear line at the time of development without any broken pieces while the broken edge of the cover is less sharp.

The second object of the present invention is to provide a destructive type air bag housing cover which comprises an olefin-based thermoplastic elastomer, which is excellent in mechanical properties such as flexibility and low-temperature impact resistance, which is low in surface gloss, and which is excellent in releasing property.

To attain the above aim, in the first aspect of the present invention, there is provided an air bag housing cover comprising (A) an olefin-based thermoplastic elastomer comprising (A1) a propylene homopolymer having an isotactic index of not less than 90%, and (A2) a copolymer of propylene and a C₂ to C₈ α-olefin other than propylene, said propylene homopolymer (A1) and said copolymer (A2) being present in amounts of 30 to 60% by weight and 70 to 40% by weight, respectively, based on a total amount of the components (A1) and (A2), and said copolymer having propylene unit and ethylene unit as essential constituting units,
said olefin-based thermoplastic elastomer (A) being obtained by producing the component (A2) by polymerization subsequent to the production of the component (A1) by polymerization, and having a 0°C eluate content of 30 to 60% by weight based on a total eluate content as measured at a temperature between 0°C and 140°C by a temperature rising elution fractionation using o-dichlorobenzene as a solvent.

In the second aspect of the present invention, there is provided an air bag housing cover as defined in the first aspect, further comprising (B) a propylene-based polymer in an amount of 10 to 150 parts by weight based on 100 parts by weight of the olefin-based thermoplastic elastomer (A).

In the third aspect of the present invention, there is provided an air bag housing cover as defined in the first aspect, wherein the content of the propylene-based polymer (B) is 10 to 70 parts by weight based on 100 parts by weight of the olefin-based thermoplastic elastomer (A).

In the fourth aspect of the present invention, there is provided an air bag housing cover as defined in the first aspect, further comprising (C) a softening agent for hydrocarbon-based rubbers in an amount of 1 to 30 parts by weight based on 100 parts by weight of the olefin-based thermoplastic elastomer (A).

In the fifth aspect of the present invention, there is provided an air bag housing cover as defined in the third aspect, further comprising (D) an ethylene-α-olefin copolymer in an amount of 15 to 180 parts by weight based on 100 parts by weight of the olefin-based thermoplastic elastomer (A).

In the sixth aspect of the present invention, there is provided an air bag housing cover as defined in the third aspect, further comprising (E) an inorganic filler in an amount of 1 to 50 parts by weight based on 100 parts by weight of the olefin-based thermoplastic elastomer (A).

In the seventh aspect of the present invention, there is provided an air bag housing cover as defined in the third aspect, wherein the thermoplastic elastomer composition further comprises (F) a styrene-based thermoplastic elastomer in an amount of 1 to 50 parts by weight based on 100 parts by weight of a sum of the components (A), (B) and (D).

In the eighth aspect of the present invention, there is provided an air bag housing cover as defined in the third aspect, wherein the thermoplastic elastomer composition further comprises (C) a softening agent for hydrocarbon-based rubbers in an amount of 1 to 100 parts by weight based on 100 parts by weight of a sum of the components (A), (B) and (D).

In the ninth aspect of the present invention, there is provided an air bag housing cover comprising:
(A) 100 parts by weight of an olefin-based thermoplastic elastomer comprising (A1) a propylene homopolymer having an isotactic index of not less than 90%, and (A2) a copolymer of propylene and a C₂ to C₈ α-olefin other than propylene, said propylene homopolymer (A1) and said copolymer (A2) being present in amounts of 30 to 60% by weight and 70 to 40% by weight, respectively, based on a total amount of the components (A1) and (A2), and said copolymer having propylene unit and ethylene unit as essential constituting units,
   said olefin-based thermoplastic elastomer (A) being obtained by producing the component (A2) by polymerization subsequent to the production of the component (A1) by polymerization, and having a 0°C eluate content of 30 to 60% by weight based on a total eluate content as measured at a temperature between 0°C and 140°C by a temperature rising elution fractionation using o-dichlorobenzene as a solvent;
(B) 10 to 150 parts by weight of a propylene-based polymer; and
(D) 15 to 180 parts by weight of an ethylene-α-olefin copolymer,
the composition comprising said components(A), (B) and (D) having a bending modulus of 150 to 500 MPa.

In the tenth aspect of the present invention, there is provided an air bag housing cover comprising:
(A) 100 parts by weight of an olefin-based thermoplastic elastomer comprising (A1) a propylene homopolymer having an isotactic index of not less than 90%, and (A2) a copolymer of propylene and a C₂ to C₈ α-olefin other than propylene, said propylene homopolymer (A1) and said copolymer (A2) being present in amounts of 30 to 60% by weight and 70 to 40% by weight, respectively, based on a total amount of the components (A1) and (A2), and said copolymer having propylene unit and ethylene unit as essential constituting units,
   said olefin-based thermoplastic elastomer (A) being obtained by producing the component (A2) by polymerization subsequent to the production of the component (A1) by polymerization, and having a 0°C eluate content of 30 to 60% by weight based on a total eluate content as measured at a temperature between 0°C and 140°C by a temperature rising elution fractionation using o-dichlorobenzene as a solvent;
(B) 10 to 150 parts by weight of a propylene-based polymer; and
(D) 15 to 180 parts by weight of an ethylene-α-olefin copolymer,
the composition comprising said components(A), (B) and (D) having a bending modulus of 150 to 500 Mpa,
said air bag housing cover having at least one groove portion for destruction and having a morphology of island-like phase of a rubber component dispersed in a matrix of polypropylene;
the circle-corresponding diameter of the rubber component phase being not more than 2 µm; and
the average acicularity of rubber component phase represented by a ratio a/b wherein a and b represent a major axis diameter and minor axis diameter, respectively, being 2 to 10.

### BRIEF DESCRIPTION OF THE DRAWINGS

Fig. 1 is a schematically sectional view at the groove of the air bag housing cover.
Fig. 2 is a schematically sectional view of a dispersion condition at the groove of the air bag housing cover.

### DETAILED DESCRIPTION OF THE INVENTION

An olefin-based thermoplastic elastomer (A) of the present invention comprises a propylene homopolymer (A1) having an isotactic index of not less than 90% and a copolymer (A2) of propylene with other α-olefin having 2-8 carbon atoms, containing propylene unit and ethylene unit as essential structure unit. The elastomer (A) is produced by first polymerizing to obtain the component (A1), followed by the polymerization for obtaining the component (A2).

The component (A1) comprises a homopolymer of propylene having an isotactic index of not less than 90 %, preferably not less than 95 %. When the isotactic index of the component (A1) is less than the above range, the resulting olefin-based thermoplastic elastomer (A) is poor in balance of mechanical properties, such as balance between flexibility and tensile strength, and in heat resistance.

The component (A2) is a copolymer of propylene with other α-olefin having 2-8 carbon atoms, containing propylene unit and ethylene unit as essential structure unit. A copolymer of propylene with ethylene is preferred as the component (A2). Examples of α-olefins having 4-8 carbon atoms include 1-butene, 3-methyl-1-butene, 1-pentene, 4-methyl-1-pentene, 1-hexene, and 1-octene. The component (A2) may be copolymerized with a non-conjugated diene such as 1,4-hexadiene, 4-methyl-1,4-hexadiene, 5-methyl-1,4-hexadiene, 6-methyl-1,5-heptadiene, 1,4-octadiene, 7-methyl-1,6-octadiene, cyclohexadiene, cyclooctadiene, dicyclopentadiene, 5-methylene-2-norbornene, 5-ethylidene-2-norbornene, 5-butylidene-2-norbornene, and 5-isopropenyl-2-norbornene.

It is necessary that the olefin-based thermoplastic elastomer (A) of the present invention should comprise 30 to 60 % by weight of the component (A1) and 70 to 40 % by weight of the component (A2) based on the total weight of the component (A1) and the component (A2). The amount of the component (A1) is preferably 40 to 55 % by weight, while the amount of the component (A2) is preferably 60 to 45 % by weight. When the content of the component (A1) is less than above range and the content of the component (A2) is over the above range, the olefin-based thermoplastic elastomer is poor in balance of mechanical properties, such as balance between flexibility and tensile strength, and in releasing property as a material of an air bag housing cover. When the content of the component (A1) is over the above range and the content of the component (A2) is less than the above range, the olefin-based thermoplastic elastomer may be poor in balance of mechanical properties, such as balance between flexibility and low-temperature impact resistance and, additionally, it may be difficult to obtain low surface gloss.

It is essential that the olefin-based thermoplastic elastomer (A) according to the present invention should have such a property that, in temperature rising elution fractionation in the temperature range of 0 to 140°C using o-dichlorobenzene as a solvent, the eluate obtained at 0°C is 30 to 60% by weight, preferably 35 to 50 % by weight, based on the total elution weight. When the eluate obtained at 0°C is less than the above range, the olefin-based thermoplastic elastomer may be poor in balance of mechanical properties such as balance between flexibility and low-temperature impact resistance as a material of an air bag housing cover and, additionally, it may be difficult to obtain low surface gloss. when the eluate is over the above range, the olefin-based elastomer may be poor in balance of mechanical properties, such as balance between flexibility and tensile strength, in moldability, in rigidity and in releasing property.

It is preferred that the olefin-based thermoplastic elastomer (A) according to the present invention have such a property that, in temperature rising elution fractionation in the temperature range of 0 to 140°C using o-dichlorobenzene as a solvent, the eluate at 80 to 100°C is 1 to 6 % by weight based on the total elution weight. When the eluate obtained at 80 to 100°C is less than the above range, the olefin-based thermoplastic elastomer tends to be poor in rigidity and heat resistance as a material of an air bag housing cover. When the eluate is over the above range, the olefin-based thermoplastic elastomer tends to be poor in balance of mechanical properties such as balance between flexibility and low-temperature impact resistance.

The temperature rising elution fractionation (TREF) is a conventional analytical method based on the following principle. A polymer is fully dissolved in a solvent at a high temperature, and the solution is then cooled until a thin laminate is formed on a surface of an inert carrier previously contained in the solution. At that time, the layers of the laminate are formed in the order of crystallizability, that is, a layer of a component having higher crystallizability is formed first and layers of a component having lower crystallizability and a non-crystalline component are successively formed later. Next, the temperature is raised in a continuous or stepwise manner. In this case, contrary to the above case, the low crystalline or non-crystalline component is first eluted, and the high crystalline component is lastly eluted. The composition distribution of the polymer is analyzed from an elution curve obtained by plotting the elution amount at each elution temperature.

It is preferred that the xylene solubles at room temperature (about 23°C) of the olefin-based thermoplastic elastomer (A) have a weight-average molecular weight of 200,000 to 800,000 for reasons of low surface gloss.

It is also preferred that the olefin-based thermoplastic elastomer (A) according to the present invention have a density of 0.87 to 0.88 g/cm³ as measured according to JIS K 7112, a melt flow rate of 0.05 to 30 g/10 minute as measured at a temperature of 230 °C and under a load of 21.18 N according to JIS K 7210, and a bending modulus of not more than 600 MPa as measured according to JIS K 7203.

The olefin-based thermoplastic elastomer (A) according to the present invention is produced by first polymerizing the component (A1) and then polymerizing the component (A2). The production of an olefin-based thermoplastic elastomer by a sequential polymerization is a well-known method and comprises the following two steps, as disclosed in detail in Japanese Patent Application Laid-Open (KOAKI) No. 2000-230089. In the first step, propylene is homopolymerized in the presence of a catalyst comprising an organoaluminum compound and a solid component, the solid component comprising a titanium atom, a magnesium atom, a halogen atom, and an electron-donating compound as essential components, under conditions of a temperature of 50 to 150° C, preferably 50 to 100°C, and a partial pressure of propylene of 0.5 to 4.5 MPa, preferably 1.0 to 3.5 MPa, to produce the component (A1). Subsequently, in the second step, a combination of propylene with ethylene or a combination of propylene with ethylene and an α-olefin having 4 to 8 carbon atoms is fed, and copolymerization of propylene with ethylene or copolymerization of propylene with ethylene and α-olefin is carried out in the presence of the above catalyst under conditions of a temperature of 50 to 150° C, preferably 50 to 100° C, a partial pressure of propylene and a partial pressure of ethylene of each 0.3 to 4.5 MPa, preferably 0.5 to 3.5 MPa, to produce the component (A2).

The olefin-based thermoplastic elastomer (A) of the present invention may be a composition containing a propylene-based polymer component (B) for the purpose of adjusting the moldability, rigidity and heat resistance of the air bag housing cover. The content of the component (B) is 10 to 200 parts by weight, preferably 10 to 150 parts by weight, more preferably 15 to 100 parts by weight, based on 100 parts by weight of the olefin-based thermoplastic elastomer component (A). When the content of the component (B) is less than the above range, the olefin-based thermoplastic elastomer (A) may be occasionally poor in dimensional stability and may have unsatisfactory rigidity and heat resistance. When the content of the component (B) is over the above range, the olefin-based thermoplastic elastomer (A) may occasionally fail to give low surface gloss and sufficient flexibility.

Examples of the propylene-based polymer for the component (B) include a propylene homopolymer and a copolymer of propylene with other α-olefin having about 2 to 10 carbon atoms such as ethylene, 1-butene, 3-methyl-1-butene, 1-pentene, 4-methyl-1-pentene, 1-hexene, 4-methyl-1-hexene, 1-heptene, 1-octene and 1-decene. Specific examples of the copolymer include propylene-ethylene copolymer, propylene-1-butene copolymer, propylene-ethylene-1-butene copolymer, and propylene-4-methyl-1-pentene copolymer. Of these, propylene-ethylene copolymer is preferred and propylene-ethylene block copolymer having ethylene content of 1 to 10 % by weight is more preferred. The propylene-based polymer may be prepared by polymerization using either Ziegler catalyst or a metallocene catalyst.

The propylene-based polymer for the component (B) preferably has a density of not less than 0.90 and has an isotactic index of not less than 90 %, more preferably not less than 95 %, for reasons of rigidity and heat resistance as an air bag housing cover. When the isotactic index of the component (B) is less than the above range, the olefin-based thermoplastic elastomer composition tends to be poor in balance of mechanical properties, such as balance between flexibility and tensile property, and in heat resistance. The propylene-based polymer for the component (B) preferably has a melt flow rate of 10 to 120 g/10 min, more preferably, 15 to 100 g/10 min, as measured at a temperature of 230°C and under a load of 21.18 N according to JIS K 7210. When the melt flow rate of the component (B) is less than the above range, the olefin-based thermoplastic elastomer composition tends to be poor in moldability. When the melt flow rate of the component (B) is over the above range, the olefin-based thermoplastic elastomer composition tends to be unable to obtain sufficient mechanical properties.

The olefin based thermoplastic elastomer (A) may further comprises a hydrocarbon rubber softener component (C) for the purpose of imparting moldability and flexibility to the air bag housing cover. The content of the component (C) is preferably 1 to 30 parts by weight, more preferably 3 to 28 parts by weight, based on 100 parts by weight of the olefin-based thermoplastic elastomer component (A). When the content of the component (C) is less than 1 part by weight, the obtained composition may be poor in moldability. When the content of the component (C) is over 30 parts by weight, the obtained composition may be poor in heat resistance.

A preferred hydrocarbon rubber softer for the component (C) is a mineral oil-based petroleum fraction having a high boiling point and generally comprises a mixture of aromatic hydrocarbons, naphthene hydrocarbons, and paraffin hydrocarbons. The softeners are classified into three types: a paraffin-based oil, in which the carbon atoms of the paraffin hydrocarbons account for at least 50 % of the total number of carbon atoms, a naphthene-based oil, in which the carbon atoms of the naphthene hydrocarbons account for 30 to 45 % of the total number of carbon atoms, and an aromatic-oil, in which the carbon atoms of the aromatic hydrocarbons account for at least 30% of the total number of carbon atoms. Of these, a paraffin oil-based type is preferred for the purpose of the present invention.

The hydrocarbon rubber softener for the component (C) preferably has a weight-average molecular weight of 300 to 2,000, more preferably 500 to 1,500, a kinetic viscosity at 40°C of 20 to 800 cSt, more preferably 50 to 600 cSt, a pour point of -40 to 0°C, more preferably -30 to 0°C, and a flashing point of 200 to 400°C, more preferably 250 to 350°C.

The olefin-based thermoplastic elastomer (A) of the present invention may be a composition containing, in addition to the component (B) and/or component (C), a copolymer of ethylene with an α-olefin (which will be hereinafter referred to as "ethylene-α-olefin copolymer (D)") for the purposes of adjusting the flexibility of the air bag housing cover. Examples of the ethylene- α-olefin copolymers include a copolymer of ethylene with an α-olefin having about 3 to 10 carbon atoms such as 1-butene, 3-methyl-1-butene, 1-pentene, 4-methyl-1-pentene, 1-hexene, 4-methyl-1-hexene, 1-heptene, 1-octene or 1-decene. The ethylene- α-olefin copolymers may further copolymerized with a non-conjugated diene such as 1,4-hexadiene, 4-methyl-1,4-hexadiene, 5-methyl-1,4-hexadiene, 6-methyl-1,5-heptadiene, 1,4-octadiene, 7-methyl-1,6-octadiene, cyclohexadiene, cyclooctadiene, dicyclopentadiene, 5-methylene-2-norbornene, 5-ethylidene-2-norbornene, 5-butylidene-2-norbornene or 5-isopropenyl-2-norbornene.

The content of the ethylene- α-olefin copolymer (D) is 15 to 180 parts by weight, preferably 10 to 120 parts by weight, based on 100 parts by weight of the olefin-based thermoplastic elastomer component (A). When the content of the component (D) is less than the above range, the olefin-based thermoplastic elastomer (A) may be occasionally poor in dimensional stability and in flexibility. When the content of the component (D) is over the above range, the olefin-based thermoplastic elastomer (A) may be poor in releasing property, rigidity and heat resistance.

The ethylene-α-olefin copolymer for the component (D) preferably has a density of 0.85 to 0.90 g/cm³, more preferably 0.86 to 0.88 g/cm³. When the density of the component (D) is over the above range, the olefin-based thermoplastic elastomer composition tends to be poor in flexibility.

The ethylene- α-olefin copolymer for the component (D) preferably has a melt flow rate of 0.01 to 20 g/10 min, more preferably 0.1 to 15 g/10 min, as measured at a temperature of 230°C and under a load of 21.18 N according to JIS K 7210. When the melt flow rate of the component (D) is less than the above range, the olefin-based thermoplastic elastomer composition tends to be poor in moldability. When the melt flow rate of the component (D) is over the above range, the olefin-based thermoplastic elastomer composition tends to be unable to obtain satisfactory mechanical properties.

The ethylene-α-olefin copolymer for the component (D) may be prepared by polymerization using either a Ziegler catalyst such as a vanadium compound or a metallocene catalyst.

The olefin-based thermoplastic elastomer composition of the present invention may contain an inorganic filler component (E) such as calcium carbonate, silica, talc, mica, clay or glass fiber for the purpose of improving the dimensional stability and adjusting the flexibility. The content of the component (E) is generally 1 to 50 parts by weight, preferably 1 to 30 parts by weight, based on 100 parts by weight of the component (A). When the content of the inorganic filler component (E) is less than 1 part by weight, dimensional stability may not be sufficiently obtained. When the content of the inorganic filler component (E) is over 50 parts by weight, flexibility and low-temperature impact resistance may not be sufficiently obtained.

As the inorganic filler for component (E) of the present invention, talc is preferably used, and talc having an average particle size of not greater than 10 µm is more preferably used.

The olefin-based thermoplastic elastomer composition according to the present invention may further comprises styrene-based thermoplastic elastomer component (F) for the purpose of improving the mechanical properties such as low-temperature impact resistance, tensile properties, and anti-scratch property on the surface of the cover. The content of the component (F) is 1 to 50 parts by weight, preferably 3 to 20 parts by weight, based on 100 parts by weight of the component (A). When the content of the styrene-based thermoplastic elastomer component (F) is less than 1 part by weight, the obtained composition may be poor in scratch resistance. When the content of the styrene-based thermoplastic elastomer component (F) is over 50 parts by weight, the obtained composition may be poor in moldability.

The styrene-based thermoplastic elastomer for the component (F) is a block copolymer which contains aromatic vinyl polymer blocks and conjugated diene polymer blocks or random copolymer blocks of a conjugated diene with an aromatic vinyl, and which has a linear, branched or radial molecular structure, or a combined structure thereof. Such a block copolymer may be an aromatic vinyl-conjugated diene block copolymer in which the aromatic vinyl polymer blocks constitute the hard segment, while the conjugated diene polymer blocks or random copolymer blocks of a conjugated diene with an aromatic vinyl constitute the soft segment. In this case, the double bond of the conjugated diene as the soft segment block may be hydrogenated to provide a hydrogenated aromatic vinyl-conjugated diene block copolymer. These are well known as styrene-based thermoplastic elastomers.

Examples of the aromatic vinyls of the block copolymer in the styrene-based thermoplastic elastomer for the component (F) include styrene, α-methylstyrene, p-methylstyrene, dimethylstyrene. Above all, styrene is preferably used for the purpose of the present invention. Examples of conjugated dienes include butadiene, isoprene, 1,3-pentadiene, 2,3-dimethyl-1,3- butadiene. For use in the present invention, butadiene, isoprene or a mixture thereof is preferred.

The block copolymer in the styrene-based thermoplastic elastomer for the component (F) preferably has an aromatic vinyl content of 5 to 50 % by weight, more preferably 10 to 40 % by weight. It is also preferred that at least 80 %, more preferably at least 95 %, of the double bonds of the conjugated diene polymer blocks or random copolymer blocks of a conjugated diene with an aromatic vinyl be hydrogenated.

The styrene-based thermoplastic elastomer for the component (F) preferably has a melt flow rate of 0.05 to 20 g/10 min, more preferably 0.1 to 15 g/10 min as measured at a temperature of 230°C and under a load of 21.18 N according to JIS K 7210.

The olefin-based thermoplastic elastomer composition of the present invention comprises the olefin-based thermoplastic elastomer component (A) as the essential component and optionally the propylene-based copolymer component (B), the hydrocarbon rubber softener component (C), the ethylene-α-olefin copolymer component (D), the inorganic filler component (E), and the styrene-based thermoplastic elastomer component (F), if necessary. When desired, the olefin-based thermoplastic elastomer composition may be dynamically heat-treated in the presence of an organic peroxide.

The term "to dynamically heat-treat" as used herein means to knead the above composition in a melted state using a kneader. By the dynamic heat treatment, decomposition of ultrahigh molecular weight component by the organic peroxide occurs in the propylene homopolymer component (A1) of the olefin-based thermoplastic elastomer component (A) and in the propylene-based copolymer component (B), whereby the fluidity of the thermoplastic elastomer composition is improved. At the same time, a cross-linking reaction by the organic peroxide occurs in the ethylene-α-olefin copolymer component (A2) of the olefin-based thermoplastic elastomer component (A) and in the ethylene-α-olefin copolymer component (D), whereby the rubber elasticity of the thermoplastic elastomer is improved.

As the organic peroxide, any organic peroxide conventionally used in preparation of olefin-based thermoplastic elastomers can be used. Specific examples include dialkylperoxides such as di-t-butylperoxide, t-butylcumylperoxide, dicumylperoxide, 2,5-dimethyl-2,5-di(t-butylperoxy)hexane, 2,5-dimethyl-2,5-di(t-butylperoxy)hexyne-3, 1,3 -bis (t-butylperoxyisopropyl)benzene, 1,4-bis(t-butylperoxyisopropyl)benzene and 1,1-di(t-butylperoxy)-3,3,5-trimethylcyclohexane; peroxyesters such as t-butylperoxybenzoate, t-butylperoxyisopropylcarbonate, 2,5-dimethyl-2,5-di(benzoylperoxy)hexane and 2,5-dimethyl-2,5-di(benzoylperoxy)hexyne-3; diacylperoxides such as lauroylperoxide, benzoylperoxide, p-chlorobenzoylperoxide and 2,4-dichlorobenzoylperoxide; and hydroperoxides such as cumenehydroperoxide and diisopropylbenzenehydroperoxide. Above all, dialkylperoxides or peroxyesters are preferred. More preferably, dicumylperoxide, 2,5-dimethyl-2,5-di(t-butylperoxy)hexane, 2,5-dimethyl-2,5-di(t-butylperoxy)hexyne-3, 1,3- or 1,4-bis(t-butylperoxyisopropyl)benzene, 1,1-di(t-butylperoxy)-3,3,5-trimethylcyclohexane, 2,5-dimethyl-2,5-di (benzoylperoxy)hexane or 2,5-dimethyl-2,5-di(benzoylperoxy)hexyne-3 is used.

The content of the organic peroxide is preferably 0.005 to 2.0 parts by weight based on 100 parts by weight of the component (A).

The olefin based thermoplastic elastomer composition of the present invention may contain other resins or rubbers in such an amount that does not considerably deteriorate the effect of the present invention and may also contain, if necessary, various additives which are usually added to a thermoplastic elastomer, such as antioxidant, thermal stabilizer, photostabilizer, ultraviolet absorber, antistatic agent, antiblocking agent, lubricant, antifog agent, dispersion agent, neutralizer, nuclear agent, conductivity imparting agent, antibacterial agent, flame retardant and colorant.

The olefin-based thermoplastic elastomer composition of the present invention is generally prepared by mixing the olefin-based thermoplastic elastomer component (A) as the essential component and optionally the propylene-based copolymer component (B), the hydrocarbon rubber softener component (C), the ethylene- α-olefin copolymer component (D), the inorganic filler component (E), the styrene-based thermoplastic elastomer component (F) and other additives, which are generally in the form of powder or particles, uniformly using a Henschel mixer, a super mixer, a V-type blender, a tumbler blender, a ribbon blender or the like and melt-kneading the mixture using a single-screw or double-screw extruder, a kneader, a Banburry's mixer, a Brabender plastograph, a mixing roll, or the like at a temperature of about 180 to 280°C. At that time, the composition may be subjected to a dynamic heat-treatment in the presence of an organic peroxide to render the same partially cross-linked.

The air bag housing cover according to the present invention is produced by injection-molding the olefin-based thermoplastic elastomer (A) or a composition thereof prepared as above. The injection molding is performed under conditions of a molding temperature of usually 100 to 300°C, preferably about 150 to 280°C, an injection pressure of usually 5 to 100 MPa, preferably about 10 to 80 MPa, and a mold temperature of usually 20 to 80°C, preferably about 20 to 60°C.

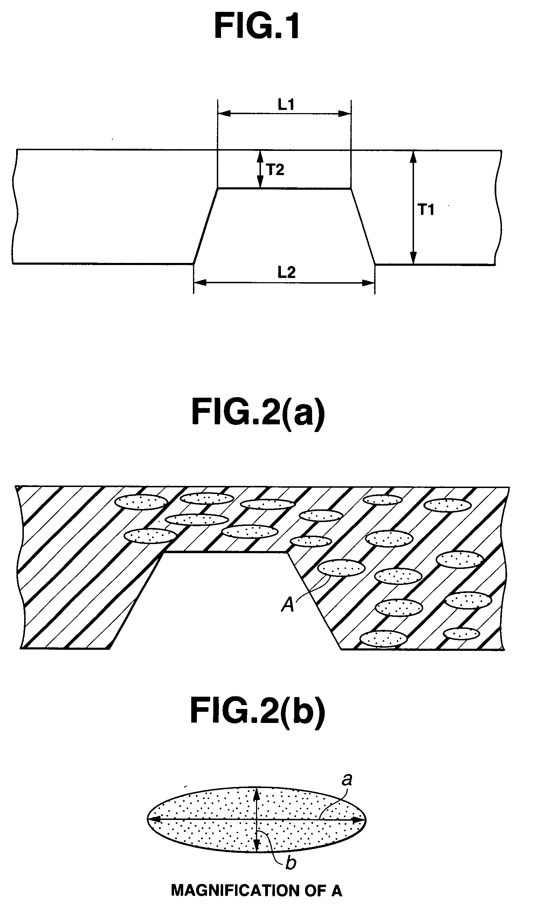

The air bag housing cover of the present invention preferably has a tear-type structure depending upon compositions thereof according to the fourth aspect. As shown in Fig. 1, the tear-type air bag housing cover is formed on a part thereof with a thin-wall groove along which the cover is opened (broken) by the force of inflation of the air bag upon air bag development. The groove is usually of a trapezoidal shape in section as shown in Fig. 1, and may also have a V-shaped, U-shaped section or the like. The groove is usually of an H shape or U shape when viewed from the front side of the airbag housing cover.

In Fig. 1, T1 represents a thickness of the cover; and T2 represents a wall thickness of the groove. The thickness T1 of the air bag cover is usually about 1 to 10 mm, and the wall thickness of the groove is usually about 0.2 to 1 mm. When the thickness T1 is too small, the cover is deteriorated in strength. When the thickness T1 is too large, the cover fails to be smoothly opened upon air bag development. When the wall thickness of the groove is too small, the groove trace is clearly recognized on the surface of the cover, resulting in unfavorable design but also occurrence of ruptures or the like.

In Fig. 1, L1 represents a width of a bottom (near the thin-walled portion) of the groove, and L2 represents a width of an upper portion of the groove. The bottom width L1 of the groove is preferably about 0 to 10 mm, and the upper width of the groove is preferably about +0.5 to 5.0 mm. When the bottom width L1 is 0, it means that the groove has a V shape in section.

In the case where the air bag housing cover has a tear type structure (formed with the groove), it is preferred that a resin used for forming the groove portion has a specific dispersion condition by controlling kneading and molding conditions of raw resins.

Fig. 2 schematically shows such a dispersion condition. In Fig. 2 (a), the groove of the air bag housing cover there is shown in section. As shown in Fig. 2 (a), the resin composition used in the present invention comprises a continuous phase of polypropylene, and an island-like dispersed phase of a rubber component (indicated by an ellipse in Fig. 2).

The rubber component used in the present invention preferably has a diameter (calculated as that of a corresponding circle as explained below; hereinafter referred to as "circle-corresponding diameter") of not more than 2 µm; and an average acicularity (ratio a/b shown in Fig. 2 (b)) of 2 to 10. The circle-corresponding diameters means a diameter of assumptive circle having an area identical to that of the rubber phase dispersed in the resin.

In Fig. 2 (b), a represents a major axis diameter; and b represents a minor axis diameter. The rubber component has a shape elongated along the surface of the air bag housing cover.

The specific island-like configuration of the rubber component (a/b = 2 to 10) can impart appropriate elasticity and hardness to the air bag housing cover under ordinary use condition (non-tear condition), and has such an effect of preventing the groove trace from being recognized on the surface of the cover.

Also, when the cover is torn and opened, the broken edge of the cover is less sharp, resulting in high safety.

The above rubber component is constituted from elastomer moieties derived from the component (A2) of component (A); the component (D); the copolymer component of the component (B); the component (F); or the like.

The air bag housing cover according to the present invention, which can be used for either a destructive air bag or a nondestructive air bag, is preferably used for a destructive air bag. It is preferred that, when used in a destructive air bag, the air bag housing cover have a bending modulus of 150 to 500 MPa as measured according to JIS K 7203, from the viewpoint of mechanical properties and so on, a melt flow rate of 1 to 60 g/10 min as measured at a temperature of 230°C and under a load of 21.18 N according to JIS K 7210, and a notched Izod impact strength of at least 50 kJ/m² as measured at a temperature of -40°C according to JIS K 7110, from the viewpoint of moldability and mechanical properties such as low-temperature impact resistance.

According to the present invention, there is provided an air bag housing cover which is made of an olefin-based thermoplastic elastomer composition, which is excellent in mechanical properties such as flexibility and low-temperature impact resistance, which has low surface gloss, and which is excellent in releasing property and dimensional stability.

### EXAMPLES

The present invention will be described in more detail below by reference to the following examples. However, it should be noted that these examples are only illustrative and not intended to limit the scope of the present invention thereto. The olefin-based-thermoplastic elastomer (A), the propylene-based copolymer (B), the hydrocarbon rubber softener (C), the ethylene- α-olefin copolymer (D), the inorganic filler (E), the styrene-based thermoplastic elastomer (F) and the organic peroxide employed in the examples and the comparative examples are shown below.

### (A) Olefin-based thermoplastic elastomer:

A-1: Olefin based thermoplastic elastomer produced by first polymerizing homopolymer of propylene having an isotactic index of 98 % (A1) and then polymerizing propylene-ethylene copolymer (A2) and comprising 51 % by weight of (A1) and 49 % by weight (A2). In temperature rising elution fractionation in the temperature range of 0 to 140°C using o-dichlorobenzene as a solvent, the eluate obtained at 0°C is 40 % by weight and the eluate obtained at 80 to 100°C is 3 % by weight, based on the total elution weight. Ethylene content: 40 % by weight; Weight average molecular weight of xylene solubles at room temperature: 480,000; Density: 0.88 g/cm³; Melt flow rate: 1 g/10 min; Bending modulus: 400 MPa

A-2: Olefin based thermoplastic elastomer produced by first polymerizing homopolymer of propylene having an isotactic index of 98 % (A1) and then polymerizing propylene-ethylene copolymer (A2) and comprising 44 % by weight of (A1) and 56 % by weight of (A2). In temperature rising elution fractionation in the temperature range of 0 to 140°C using o-dichlorobenzene as a solvent, the eluate obtained at 0°C is 37 % by weight and the eluate obtained at 80 to 100°C is 7 % by weight, based on the total elution weight. Ethylene content: 36 % by weight; Weight average molecular weight of xylene solubles at room temperature: 360,000; Density: 0.88 g/cm³; Melt flow rate: 2.5 g/10 min; Bending modulus: 400 MPa

A-3 (for Comparative Examples): Olefin based thermoplastic elastomer satisfying the following characteristics;
Produced by first polymerizing homopolymer of propylene having an isotactic index of 98 % (A1) and then polymerizing propylene-ethylene copolymer (A2) and comprising 65 % by weight of (A1) and 35 % by weight of (A2). In temperature rising elution fractionation in the temperature range of 0 to 140°C using o-dichlorobenzene as a solvent, the eluate obtained at 0°C is 25 % by weight and the eluate obtained at 80 to 100°C is 0.5 % by weight, based on the total elution weight. Weight average molecular weight of xylene solubles at room temperature: 200,000; Density: 0.88 g/cm³; Melt flow rate: 10 g/10 min; Bending modulus: 850 MPa

The isotactic index of the component (A1), the eluate in temperature rising elution fractionation, the weight-average molecular weight of xylene solubles at room temperature, the density, the melt flow rate, and the bending modulus of the olefin-based thermoplastic elastomer are measured by the following methods.

### Isotactic index of the component (A1):

Measured as a Soxhlet extraction residue using n-heptane.

### Eluate in Temperature Rising Elution Fractionation:

A cross fractionation device ("CFC T 150A," manufactured by Mitsubishi Chemical Corporation) having a temperature rising elution fractionation (TREF) mechanism for fractionation of a sample utilizing the difference in dissolution temperature, and a size exclusion chromatography (SEC) connected on an online basis thereto for further fractionating fractions according to molecular sizes was used as a measuring device. Ortho-Dichlorobenzene was used as a solvent. The polymer was dissolved in the solvent at 140° to a concentration of 4 mg/ml. The solution was injected into a sample loop in the measuring device. The sample solution within the sample loop was injected into a stainless steel column attached to the TREF device and having an inner diameter of 4 mm and a length of 150 mm, packed with glass beads as an inert carrier. The temperature was lowered from 140°C to 0°C at a temperature fall rate of 1°C/min so that the surfaces of the inert carrier were coated with the sample solution. This column was kept at 0°C for 30 minutes. Thereafter, 2 ml of the component dissolved at a temperature of 0°C was injected at a flow rate of 1 ml/min from the TREF column into an SEC column ("AD80M/S," manufactured by Showa Denko K. K.; three columns). During molecular size fractionation in SEC, the temperature of the TREF column was raised to the next elution temperature (5°C). The temperature was kept at that temperature for 30 minutes, followed by injection into the SEC column. The above procedure was repeated. The eluate portions in SEC were measured at intervals of 39 minutes. The elution temperatures were 0°C, 5°C, 10°C, 15°C, 20°C, 25°C, 30°C, 35°C, 40°C, 45°C, 49°C, 52°C, 55°C, 58°C, 61°C, 64°C, 67°C, 70°C, 73°C, 76°C, 79°C, 82°C, 85°C, 88°C, 91°C, 94°C, 97°C, 100°C, 102°C, 120°C, and 140°C, and increased stepwise. For solutions fractionated according to molecular sizes in the SEC column, the absorbance proportional to the polymer concentration was measured with an infrared spectrophotometer attached to the device (detected by stretching vibration of methylene at a wavelength of 3.42 µm) to obtain chromatograms for each of the elution temperature portions. A base line was drawn using a built-in data processing software on the chromatograms for the elution temperature portions, followed by arithmetic processing. The area of each chromatogram was integrated to calculate an integral elution curve. The integral elution curve was differentiated by the temperature to calculate a differential elution curve. A diagram as the calculation results was output using a printer. The output diagram of the differential elution curve was such that the elution temperature was drawn as abscissa in a size of 89.3 mm per 100°C, while differential amount (the total integral elution amount was normalized as 1.0, and the amount of change in 1°C was regarded as the differential amount) was drawn as ordinate in a size of 76.5 mm per 0.1 of the differential amount.

### Weight-average molecular weight of xylene solubles at room temperature:

Measured by gel permeation chromatography.

### Density:

Measured by the underwater substitution method according to JIS K 7112.

### Melt flow rate:

Measured at a temperature of 230°C and under a load of 21.18 N according to JIS K 7210.

### Bending modulus:

Measured using a test piece having a thickness of 4 mm, a width of 10 mm, and a length of 90 mm, under the conditions of a span of 64 mm and a bending rate of 2 mm/min according to JIS K 7203.

### (B) Propylene based copolymer

B-1: Propylene-ethylene copolymer polymerized using Ziegler catalyst and having an isotactic index of 98.5 %, an ethylene content of 8 % by weight, and a melt flow rate of 10 g/10 min (manufactured by Japan Polychem Corp.)

B-2: Propylene-ethylene copolymer polymerized using Ziegler catalyst and having an isotactic index of 98.5 %, an ethylene content of 10 % by weight, and an isotactic index of 50 g/10 min (manufactured by Japan Polychem Corp.)

The isotactic index and the melt flow late herein were measured by the same methods as above.

### (C) Hydrocarbon rubber softener

C-1: Paraffin oil having a weight-average molecular weight of 746, a dynamic viscosity at 40°C of 382 cSt, a pour point of - 15°C and a flashing point of 300°C (manufactured by Idemitsu Kosan Co., Ltd.)

### (D) Ethylene- α-olefin copolymer

D-1: Ethylene-1-butene copolymer polymerized using a metallocene catalyst and having a 1-butene content of 33 % by weight, a density of 0.86 g/cm³, and a melt flow rate of 2 g/10 min (manufactured by Mitsui Chemicals Inc.)

D-2: Ethylene-1-octene copolymer polymerized using a metallocene catalyst and having a 1-octene content of 25 % by weight, a density of 0.87 g/ cm³, and a melt flow rate of 1 g/10 min (manufactured by DuPont Dow Elastomer LLC)

The density and the melt flow late herein were measured by the same methods as above.

### (E) Inorganic filler

E-1: Talc having an average particle size of 4.6 µm (manufactured by Fuji Talc).

### (F) Styrene-based thermoplastic elastomer

F-1: Hydrogenated styrene homopolymer moiety-butadiene homopolymer moiety block copolymer having a styrene content of 29 % by weight, a hydrogenation rate of 99 %, and a melt flow rate of 1 g/10 min (manufactured by Clayton Japan)

The melt flow rate herein was measured by the same method as above.

### Inorganic peroxide: 2,5-dimethyl-2,5-di(t-butylperoxy)hexane

### Examples 1 to 22, Comparative Examples 1 to 2

The components (A), (B), (C), (D), (E), (F) and the organic peroxide shown in Tables 1-1 through 1-4 were mixed in amounts shown in Tables 1-1 through 1-4, together with 0.1 part by weight of tetrakis [methylene-3-(3',5'-di-t-butyl-4'-hydroxyphenyl)-propionate]methane based on 100 parts by weight of the total amount of the above ingredients as an antioxidant. The mixture was melt-kneaded at 200°C using a double-screw extruder PCM45 (cylinder diameter: 45 mm, L/D=33, manufactured by Ikegai Corp.) and pelletized to produce an olefin-based thermoplastic elastomer composition. The melt flow rate of the thus obtained olefin-based thermoplastic elastomer composition was measured by the same method as above. The results are summarized in Tables 1-1 through 1-4.

From the thus obtained olefin-based thermoplastic elastomer, sample pieces were produced by injection-molding under the conditions of an injection temperature of 220°C, an injection pressure of 50 MPa, and a mold temperature of 40°C using an inline screw-type injection molding machine (IS130G, manufactured by Toshiba Machine Co., Ltd.). The sample pieces were measured for the bending modulus in the same manner as described above, and for the tensile rupture strength, the impact strength and the linear expansion coefficient by the following methods. The results are summarized in Tables 1-1 through 1-4.

### Tensile rupture strength:

Measured at a stress rate of 50 mm/min, using a No.2 type test piece, according to JIS K 7113.

### Impact strength:

Notched Izod impact strength at a temperature of -40°C was measured using a notched test piece having a thickness of 10 mm, a width of 4 mm and a length of 80 mm, according to JIS K 7110.

### Linear expansion coefficient:

Measured in a temperature range from 25 to 80°C and at a temperature rising rate of 2°C/min, with a thermal expansion meter DL-7000Y-L manufactured by Shinku Riko KK, using a test piece having a thickness of 4 mm, a width of 10 mm and a length of 45 mm.

Using the olefin-based thermoplastic elastomer compositions obtained as above, a tear type air bag housing cover having a frame with reinforcing ribs on the reverse side, an average wall thickness of 3 mm and an expected tear line with a wall thickness of 0.5 mm on the reverse side was fabricated by injection-molding under the conditions of an injection temperature of 220°C, an injection pressure of 50 MPa, and a mold temperature of 40°C using an inline screw-type injection molding machine (IS220, manufactured by Toshiba Machine Co., Ltd.). At that time, the releasing property was evaluated by a method mentioned below. The gloss of the thus obtained air bag cover was measured. Also, an air bag inflation/development test was conducted to evaluate the inflatability and developability of the air bag cover. The results are summarized in Tables 1-4.

### Releasing property:

A test piece having a length of 300 mm, a width of 180 mm and a thickness of 3.5 mm was formed and the resistance force exerted on an ejector pin at the time of the formation was measured using a strain gauge. Also, whether there appeared a distortion of the ejector pin mark or not was observed with naked eyes. The evaluation standards are as follows.
G: The resistance force was less than 200 kg, or the resistance force was 200 kg or greater but no distortion of the ejector pin mark was observed.
NG: The resistance force was 200 kg or higher and a distortion of the ejector pin mark was observed.

### Surface gloss:

Measured with an incident angle of 60° according to JIS K 7105.

### Inflatability and developability of air bag housing cover:

An air bag housing part and an air bag module were fixed to the frame on the reverse side of the air bag housing cover. Two sets of the assembly were prepared, one of which was placed in a thermostatic bath at -35°C and the other in a thermostatic bath at 80°C for one hour. Thereafter, an air bag inflation/development test was conducted on each set. The evaluation standards are as follows.
NG: There occurred a problem that the air bag did not develop properly, that the cover was broken and scattered, or that the frame was broken.
G: Problems as mentioned above did not occur.

### Calculation of acicularity and circle-corresponding diameter:

### 1) Observation by electron microscope:

A small piece was cut out from a thin wall portion of an injection-molded product so as to form a section parallel with the resin flow direction at a center of its thickness. Then, after stained with ruthenium tetraoxide (RuO₄), the thus obtained piece was further formed into a ultrathin piece having a thickness of 100 nm using a diamond knife fitted to a ultra-microtome ("ULTRA-CUT N" manufactured by Reihelt Co., Ltd.). The thus obtained ultrathin piece was directly observed at a magnification of x 3,300 using a transmission electron microscope ("JEM 100CX" manufactured by Nippon Denshi Co., Ltd.). Rubber particles contained in the resin composition were observed as black particles because of staining with RuO₄, thereby enabling the shape thereof to be quantified.

### 2) Image analysis of shape of rubber component:

The transmission electron microphotograph obtained in the above 1) was analyzed by an image analyzer ("SPICA" manufactured by Nippon Abionics Co., Ltd.) to determine an acicularity and a circle-corresponding diameter of the rubber phases. The circle-corresponding diameter was calculated as follows. That is, first, assumptive circles each having an area identical to that of the individual rubber phases dispersed in the resin composition were prepared, and then diameters thereof were measured as the circle-corresponding diameters from which the average value was obtained to determine an average circle-corresponding diameter. In addition, the maximum diameter (a) of the individual rubber phases dispersed in the resin composition, and the minimum distance (b) between two lines parallel with the maximum diameter (a) when each rubber phase is interposed therebetween, were respectively measured to calculate the acicularity a/b. The average value of the a/b values was calculated to obtain an average acicularity of the rubber phases. Meanwhile, in order to determine the average circle-corresponding diameter and the average acicularity, the region of 70 µm x 50 µm was subjected to image analysis in which the whole rubber phases involved in this region were measured.

In Tables 1-1 through 1-4, parts are by weight, "NB" stands for "Not broken", and symbols (A)-(F) are as follows:
(A): Olefin-based thermoplastic elastomer
(B): Propylene-based copolymer
(C): Hydrocarbon rubber softener
(D): Ethylene- α-olefin copolymer
(E): Talc
(F): Styrene-based elastomer

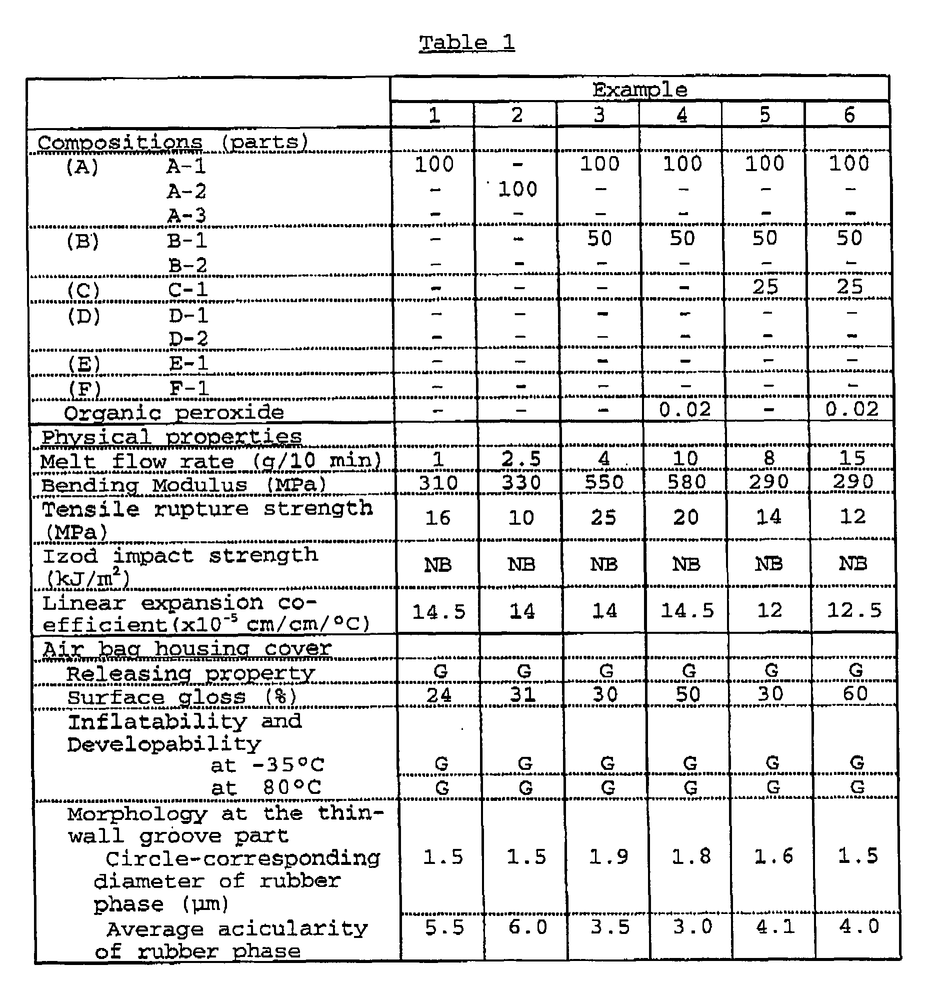

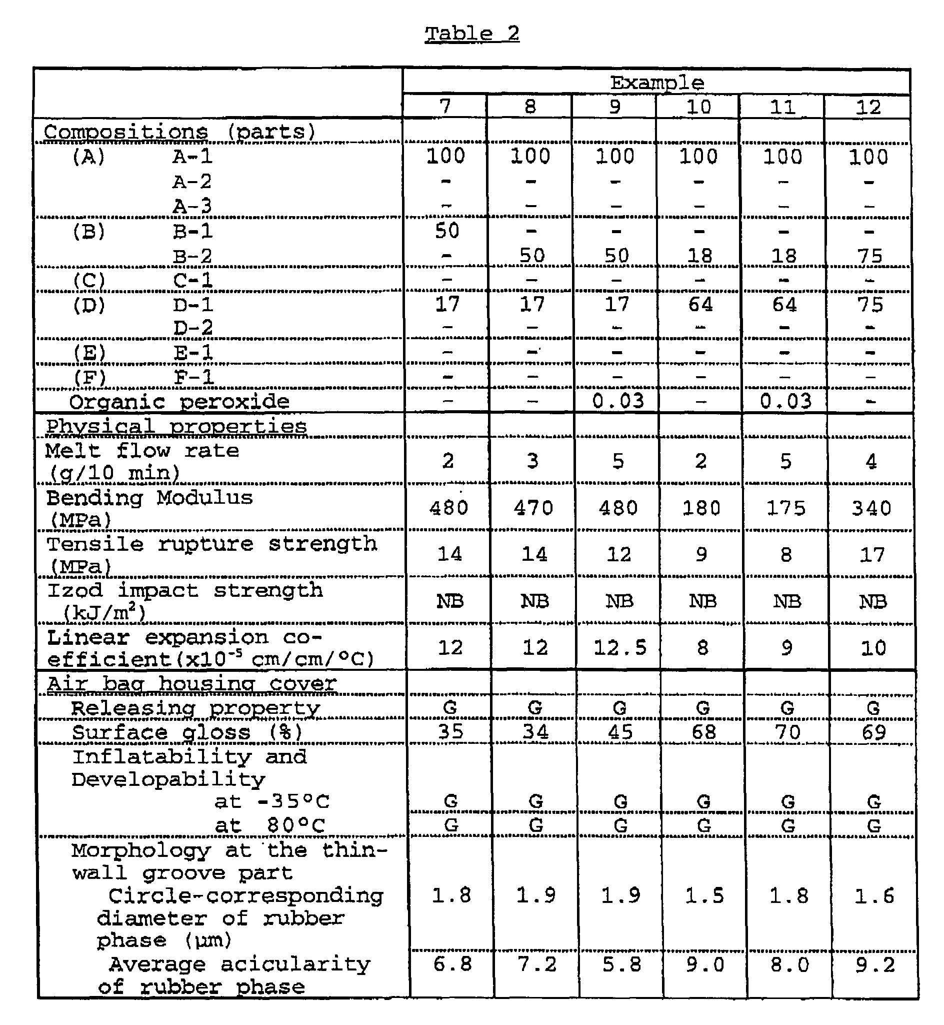

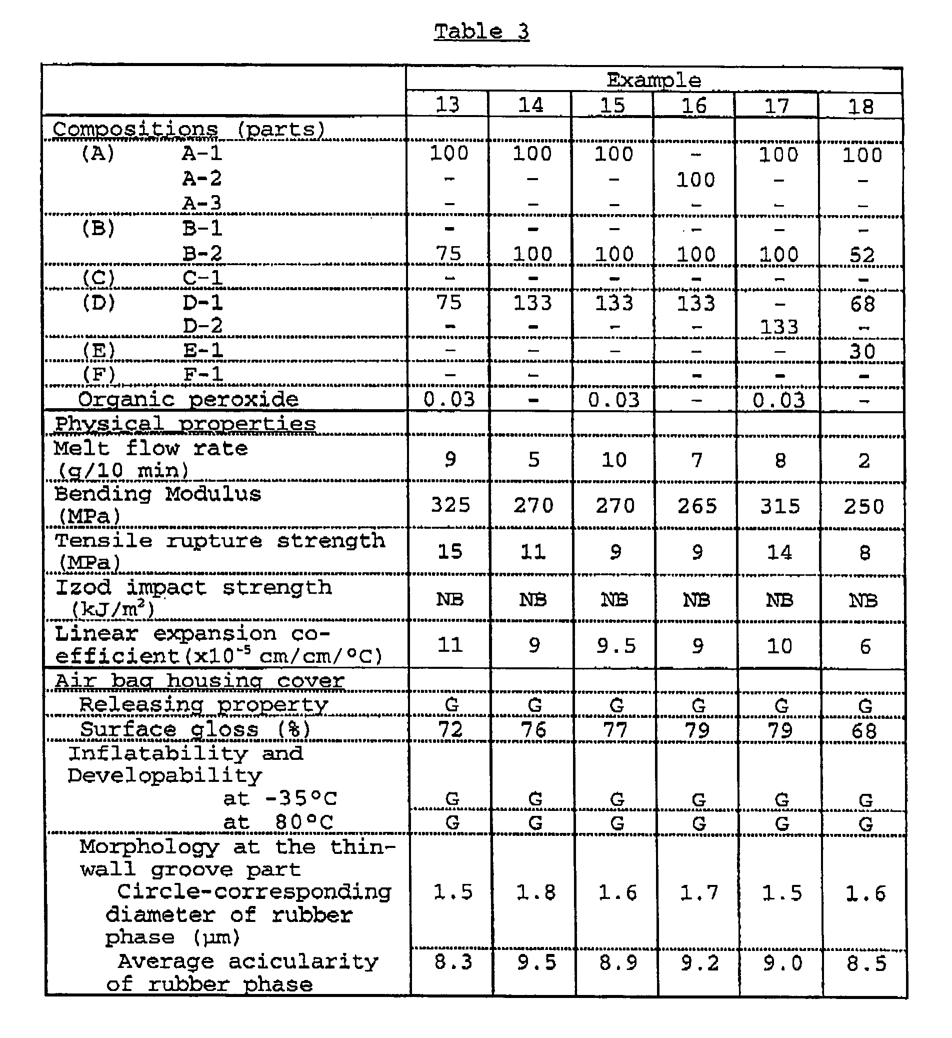

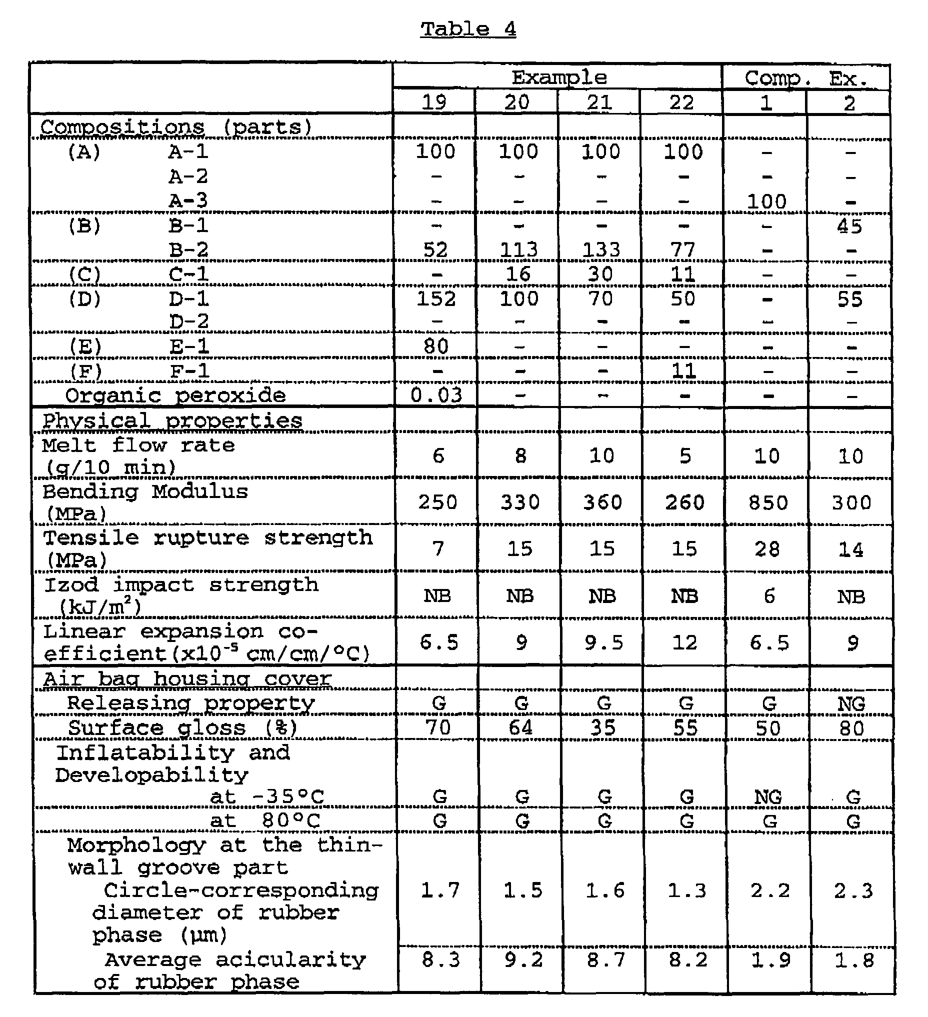

## Claims

1. An air bag housing cover comprising (A) an olefin-based thermoplastic elastomer comprising (A1) a propylene homopolymer having an isotactic index of not less than 90%, and (A2) a copolymer of propylene and a C₂ to C₈ α-olefin other than propylene, said propylene homopolymer (A1) and said copolymer (A2) being present in amounts of 30 to 60% by weight and 70 to 40% by weight, respectively, based on a total amount of the components (A1) and (A2), and said copolymer having propylene unit and ethylene unit as essential constituting units,
said olefin-based thermoplastic elastomer (A) being obtained by producing the component (A2) by polymerization subsequent to the production of the component (A1) by polymerization, and having a 0°C eluate content of 30 to 60% by weight based on a total eluate content as measured at a temperature between 0°C and 140°C by a temperature rising elution fractionation using o-dichlorobenzene as a solvent.

2. An air bag housing cover according to claim 1, wherein said olefin-based thermoplastic elastomer (A) has an eluate content of 1 to 6% by weight in a temperature range of 80 to 100°C as measured by the temperature rising elution fractionation.

3. An air bag housing cover according to claim 1, wherein said olefin-based thermoplastic elastomer (A) contains a room-temperature xylene-soluble having weight-average molecular weight of 200,000 to 800,000.

4. An air bag housing cover according to claim 1, further comprising (B) a propylene-based polymer in an amount of 10 to 150 parts by weight based on 100 parts by weight of the olefin-based thermoplastic elastomer (A).

5. An air bag housing cover according to claim 4, wherein the content of the propylene-based polymer (B) is 10 to 200 parts by weight based on 100 parts by weight of the olefin-based thermoplastic elastomer (A).

6. An air bag housing cover according to claim 4, wherein said propylene-based polymer (B) is a propylene-ethylene block copolymer having an ethylene content of 1 to . 10% by weight.

7. An air bag housing cover according to claim 1, further comprising (C) a softening agent for hydrocarbon-based rubbers in an amount of 1 to 30 parts by weight based on 100 parts by weight of the olefin-based thermoplastic elastomer (A).

8. An air bag housing cover according to claim 5, further comprising (D) an ethylene-α-olefin copolymer in an amount of 15 to 180 parts by weight based on 100 parts by weight of the olefin-based thermoplastic elastomer (A).

9. An air bag housing cover according to claim 8 which is a destruction type air bag housing cover.

10. An air bag housing cover according to claim 8, wherein a bending modulus thereof is 150 to 500 MPa.

11. An air bag housing cover according to claim 8, wherein said olefin-based thermoplastic elastomer (A) contains an ethylene content of 30 to 55% by weight, and a room-temperature xylene-soluble having weight-average molecular weight of 200,000 to 800,000.

12. An air bag housing cover according to claim 8, wherein said ethylene-α-olefin copolymer (D) has a density of 0.85 to 0.88 g/cm³, and a melt flow rate of 0.01 to 20 g/10 minutes as measured at 230°C under a load of 21.18N.

13. An air bag housing cover according to claim 8, further comprising (E) an inorganic filler in an amount of 1 to 50 parts by weight based on 100 parts by weight of the olefin-based thermoplastic elastomer (A).

14. An air bag housing cover according to claim 13, wherein said inorganic filler (E) is talc having an average particle size of not more than 10 µm.

15. An air bag housing cover according to claim 8, wherein the thermoplastic elastomer composition further comprises (F) a styrene-based thermoplastic elastomer in an amount of 1 to 50 parts by weight based on 100 parts by weight of a sum of the components (A), (B) and (D).

16. An air bag housing cover according to claim 8, wherein the thermoplastic elastomer composition further comprises (C) a softening agent for hydrocarbon-based rubbers in an amount of 1 to 100 parts by weight based on 100 parts by weight of a sum of the components (A), (B) and (D).

17. An air bag housing cover according to claim 8, wherein the thermoplastic elastomer composition has a -40°C Izod impact strength of not less than 50 kJm².

18. An air bag housing cover according to claim 8, wherein said air bag housing cover has at least one groove portion for destruction, has a morphology of island-like phase of a rubber component dispersed in a matrix of polypropylene; the circle-corresponding diameter of the rubber component phase is not more than 2 µm; and the average acicularity of rubber component phase represented by a ratio a/b wherein a and b represent a major axis diameter and minor axis diameter, respectively, is 2 to 10.

19. An air bag housing cover comprising:
(A) 100 parts by weight of an olefin-based thermoplastic elastomer comprising (A1) a propylene homopolymer having an isotactic index of not less than 90%, and (A2) a copolymer of propylene and a C₂ to C₈ α-olefin other than propylene, said propylene homopolymer (A1) and said copolymer (A2) being present in amounts of 30 to 60% by weight and 70 to 40% by weight, respectively, based on a total amount of the components (A1) and (A2), and said copolymer having propylene unit and ethylene unit as essential constituting units,
said olefin-based thermoplastic elastomer (A) being obtained by producing the component (A2) by polymerization subsequent to the production of the component (A1) by polymerization, and having a 0°C eluate content of 30 to 60% by weight based on a total eluate content as measured at a temperature between 0°C and 140°C by a temperature rising elution fractionation using o-dichlorobenzene as a solvent;
(B) 10 to 150 parts by weight of a propylene-based polymer; and
(D) 15 to 180 parts by weight of an ethylene-α-olefin copolymer,
the composition comprising said components(A), (B) and (D) having a bending modulus of 150 to 500 MPa.

20. An air bag housing cover comprising:
(A) 100 parts by weight of an olefin-based thermoplastic elastomer comprising (A1) a propylene homopolymer having an isotactic index of not less than 90%, and (A2) a copolymer of propylene and a C₂ to C₈ α-olefin other than propylene, said propylene homopolymer (A1) and said copolymer (A2) being present in amounts of 30 to 60% by weight and 70 to 40% by weight, respectively, based on a total amount of the components (A1) and (A2), and said copolymer having propylene unit and ethylene unit as essential constituting units,
said olefin-based thermoplastic elastomer (A) being obtained by producing the component (A2) by polymerization subsequent to the production of the component (A1) by polymerization, and having a 0°C eluate content of 30 to 60% by weight based on a total eluate content as measured at a temperature between 0°C and 140°C by a temperature rising elution fractionation using o-dichlorobenzene as a solvent;
(B) 10 to 150 parts by weight of a propylene-based polymer; and
(D) 15 to 180 parts by weight of an ethylene-α-olefin copolymer,
the composition comprising said components(A), (B) and (D) having a bending modulus of 150 to 500 Mpa,
said air bag housing cover having at least one groove portion for destruction and having a morphology of island-like phase of a rubber component dispersed in a matrix of polypropylene;
the circle-corresponding diameter of the rubber component phase being not more than 2 µm; and
the average acicularity of rubber component phase represented by a ratio a/b wherein a and b represent a major axis diameter and minor axis diameter, respectively, being 2 to 10.
